# FASCICULE DE BREVET EUROPEEN

(11) **EP 2 475 557 B1**
(45) Date de publication et mention de la délivrance du brevet: **07.11.2018**
(21) Numéro de dépôt: 10742141.4
(22) Date de dépôt: 11.08.2010
(51) Int. Cl.: B60T 7/04, B60T 11/18

(54) **PISTON D'ACTIONNEUR DE SERVOFREIN ET SERVOFREIN EQUIPE D'UN TEL PISTON.**
BEDIENUNGSKOLBEN FÜR EINEN BREMSKRAFTVERSTÄRKER UND BREMSKRAFTVERSTÄRKER DER DAMIT VERSEHEN IST
BRAKE BOOSTER ACTUATING PISTON AND BRAKE BOOSTER PROVIDED THEREWITH

(30) Priorité: 07.09.2009 FR 0904280
(43) Date de publication de la demande: 18.07.2012
(73) Titulaire: Robert Bosch GmbH, 70442 Stuttgart (DE)
(72) Inventeur: RICHARD, Philippe, F-77500 Chelles (FR); GAFFE, François, F-93140 Bondy (FR); CAGNAC, Bastien, F-60500 Chantilly (FR)
(86) Numéro de dépôt international: PCT/EP2010/061664
(87) Numéro de publication internationale: WO 2011/026717

(56) Documents cités:
- EP-A1- 1 847 431
- US-A- 6 006 649

## Description

### Domaine de l'invention

La présente invention concerne un piston d'actionneur recevant un piston plongeur relié à la tige de commande et agissant par le disque de réaction sur la tige de poussée, le piston d'actionneur étant soumis à l'action d'un ressort de rappel et de l'entraînement du servofrein.

L'invention concerne également un servofrein équipé d'un tel piston d'actionneur.

### Etat de la technique

Il existe déjà des servofreins à piston d'actionneur tels que définis ci-dessus qui ont l'Inconvénient d'un corps de piston d'actionneur de dimensions relativement grandes engendrant un couple important lié à l'effort déporté par rapport à l'axe de poussée ; ils ont aussi une certaine longueur à cause de l'installation du capteur de course différentielle.

Le document US 6 006 449 A Parker Donald Lee du 28 décembre 1999 décrit un servofrein pneumatique avec un piston d'actionneur recevant un piston plongeur relié à la tige de commande. Le piston plongeur agit par l'intermédiaire du disque de réaction sur la tige de poussée. Le piston d'actionneur est soumis lui-même à l'action d'un ressort de rappel et de l'entraînement du servofrein. Mais ce dispositif connu a l'inconvénient d'être d'une structure particulièrement complexe se traduisant à la fois par un grand diamètre et un ensemble de longueur relativement importante aboutissant à un ensemble encombrant.

### But de l'invention

La présente invention a pour but de développer un piston d'actionneur et un servofrein équipé d'un tel piston qui soient de conception simple, de diamètre réduit ainsi que de faible longueur pour diminuer globalement l'encombrement.

### Exposé et avantages de l'Invention

A cet effet, la présente invention concerne un piston d'actionneur du type défini ci-dessus caractérisé en ce que
A- le piston d'actionneur est formé d'une pièce Injectée composée d'un corps cylindrique à l'arrière et d'une collerette à l'avant,
   - le corps cylindrique recevant le piston plongeur et le détecteur de course,
   - l'ouverture de la collerette débouchant dans le corps cylindrique étant occupée par une coupelle couvrant la face avant de la collerette pour servir d'appui au ressort de rappel et recevoir le disque de réaction dont la face arrière est accessible au piston plongeur,
B- l'extrémité arrière du corps cylindrique du piston d'actionneur comporte une disposition cruciforme intérieure de pattes primaires venant en saillie vers l'intérieur pour former le palier de guidage du piston plongeur, l'avant des pattes formant une butée.
C- le piston plongeur comporte une surface cylindrique étant bordée à l'avant par une disposition cruciforme de pattes secondaires de forme complémentaire à celle du corps du piston d'actionneur et d'orientation périphérique globale décalée, pour, au montage, introduire le piston plongeur par l'arrière dans le corps cylindrique et le retenir par la ve-
C- le piston plongeur comporte une surface cylindrique étant bordée à l'avant par une disposition cruciforme de pattes secondaires de forme complémentaire à celle du corps du piston d'actionneur et d'orientation périphérique globale décalée, pour, au montage, introduire le piston plongeur par l'arrière dans le corps cylindrique et le retenir par la venue en butée des pattes secondaires devant les pattes primaires après pivotement relatif de celles-ci,
D- un manchon de verrouillage et de guidage,
   muni d'une disposition cruciforme de nervures adaptée à la disposition cruciforme des intervalles entre les pattes secondaires, est introduit dans le piston d'actionneur par l'avant et vient avec les nervures dans l'intervalle des pattes secondaires pour bloquer en rotation le piston plongeur tout en permettant son coulissement.

Le piston d'actionneur selon l'invention a l'avantage d'être composé d'un corps de piston d'actionneur de diamètre réduit permettant une transmission efficace des efforts exercés sur le piston d'actionneur vers la tige de poussée, dans l'axe du système. Cela permet d'envisager différents systèmes d'entraînement par moteur et notamment des entraînements à crémaillère et, en particulier, à une seule crémaillère et pignon.

Ce piston d'actionneur a également l'avantage d'un coût de fabrication réduit grâce à la possibilité de montage de tous les éléments du piston d'actionneur par un côté.

Suivant une caractéristique avantageuse, le piston plongeur est terminé à l'arrière par une collerette de butée et d'appui de son ressort de rappel ayant une surface extérieure cylindrique de guidage devant la collerette de diamètre correspondant à celui du palier et de longueur supérieure à celle du palier.

Cette réalisation permet de supprimer la clé retenant le piston plongeur connu dans le corps du servofrein grâce à l'utilisation du capot du servofrein constituant la butée limitant la course arrière du piston plongeur.

L'ensemble du piston plongeur et des éléments associés à celui-ci est bloqué en rotation de manière simple par le manchon et ce dernier est bloqué en rotation dans le corps cylindrique par une liaison par la forme. En translation, elle est bloquée par la coupelle. La liaison par la forme est constituée de préférence par des pattes en saillie qui coulissent dans des fentes ou sur des appuis de la pièce en matière plastique, constituant le corps cylindrique et la collerette du piston d'actionneur. La transmission des efforts exercés par l'intermédiaire du piston d'actionneur sur le maître-cylindre se fait dans d'excellentes conditions grâce à la faible distance par rapport à l'axe de transmission ce qui se traduit par une meilleure efficacité évitant les pertes par frottements excessifs sur le guidage du corps de piston d'actionneur.

Suivant une autre caractéristique avantageuse, le manchon de verrouillage et de guidage a une côté plat en regard de la réservation du corps cylindrique pour recevoir le détecteur de course.

Cette disposition permet d'intégrer facilement le détecteur de course différentielle dans le corps du piston d'actionneur.

Suivant une autre caractéristique avantageuse, le piston plongeur est composé d'une partie arrière reliée à la tige de commande et portant la collerette et les pattes secondaires et une partie avant en une matière non magnétique, portant l'aimant en regard du détecteur ; cette partie avant ayant une section cruciforme dont les intervalles sont identiques à ceux de la section formés par les pattes secondaires de la partie arrière, pour recevoir les nervures du manchon.

La partie arrière est de préférence réalisée en acier et la partie avant en aluminium de manière à ne pas perturber le fonctionnement du détecteur de course différentielle et surtout permettre son intégration dans le piston d'actionneur.

Suivant une autre caractéristique avantageuse, le contour des pattes secondaires de la partie avant s'inscrit dans le contour intérieur de la section de manchon et le contour extérieur des pattes secondaires de la partie arrière dépassent ce contour, les nervures du manchon se prolongeant en forme de doigts pour venir dans l'intervalle des pattes secondaires de la partie arrière du piston plongeur sur la longueur nécessaire au mouvement de coulissement du piston plongeur.

Cette forme de réalisation simplifie le montage du piston de l'actionneur tout en garantissant le guidage en coulissement du piston plongeur.

Suivant une autre caractéristique avantageuse, les deux parties sont assemblées par une liaison par la forme telle qu'un frettage.

Enfin, l'invention concerne les servofreins équipés de pistons plongeurs tels que définis ci-dessus.

### Dessins

La présente invention sera décrite de manière plus détaillée à l'aide d'un exemple de piston d'actionneur de servofrein représenté dans les dessins annexés dans lesquels :
- la figure 1 est une coupe axiale par le plan médian I-I du piston d'actionneur selon l'invention,
- la figure 1A est une vue de gauche du piston d'actionneur de la figure 1, montrant la disposition des deux plans de coupe axiaux I-I et II-II,
- la figure 2 est une vue en coupe selon II II du piston d'actionneur,
- la figure 3 est une vue en coupe axiale selon les plans I-I, II-II montrant les parties démontées du piston d'actionneur selon la figure 1,
- la figure 4 est une coupe axiale selon le plan I-I du piston d'actionneur selon la figure 1A, montrant d'autres parties démontées,
- les figures 5A-5C sont des vues en perspective schématiques montrant le piston plongeur et le manchon de verrouillage et de guidage :

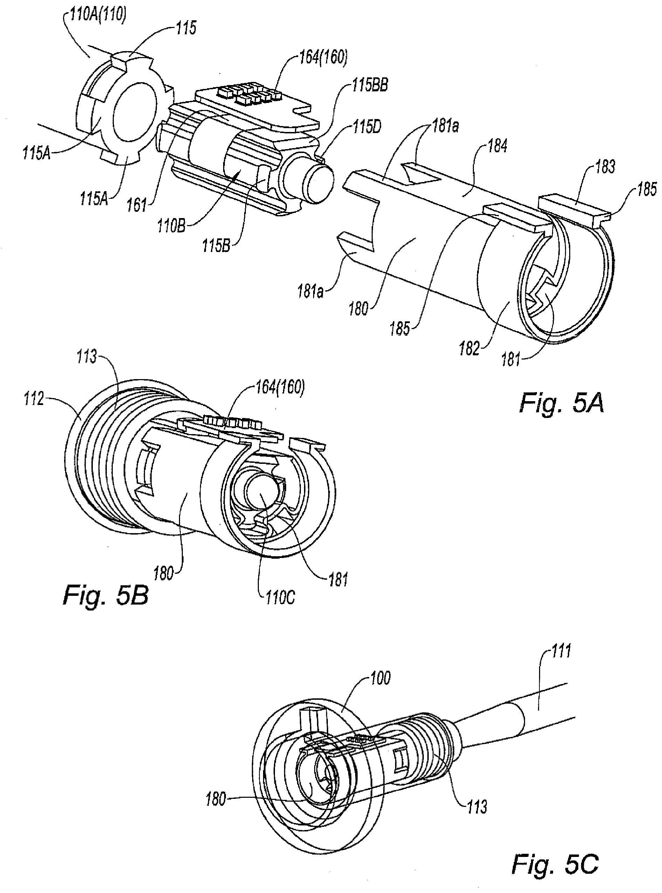

   * la figure 5A montre le piston plongeur et sa partie portant l'aimant de détection de course ainsi que le manchon de verrouillage et de guidage alignés pour leur assemblage,
   * la figure 5B montre l'imbrication du piston plongeur et de son prolongement dans le manchon de verrouillage et de guidage,
   * la figure 5C est une vue en perspective, dans la direction opposée, montrant l'assemblage du piston plongeur et du manchon de verrouillage et de guidage dans le corps du piston d'actionneur, ce dernier étant représenté très schématiquement.

### Description d'un mode de réalisation de l'invention

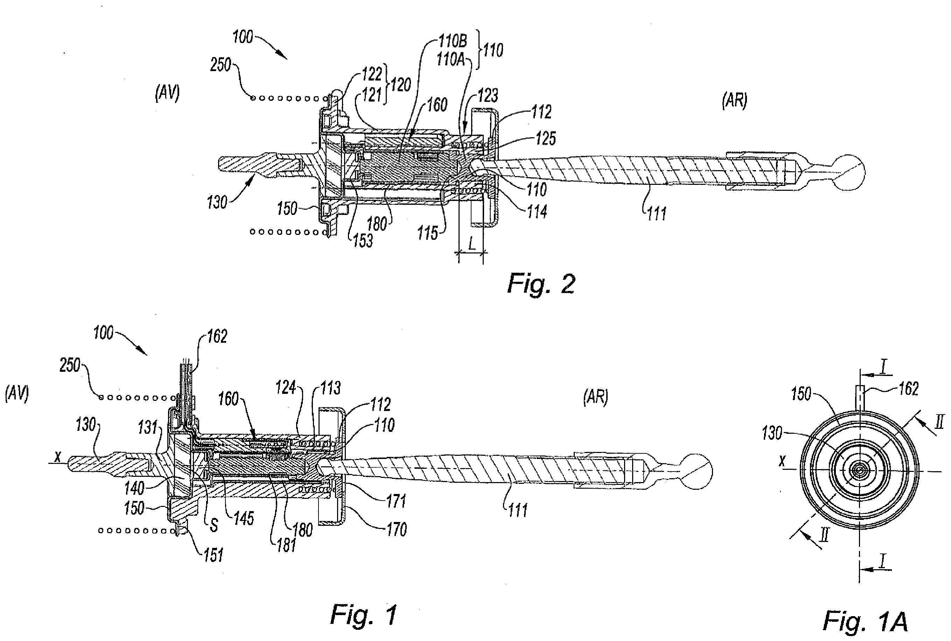

Selon les figures 1 et 2, l'invention concerne un piston d'actionneur 100 de servofrein, recevant le piston plongeur 110 relié à la tige de commande 111, elle-même reliée à la pédale de frein non représentée et commandant un maître-cylindre par l'intermédiaire d'une tige de poussée 130 actionnée dans les conditions de fonctionnement normal du servofrein par le piston d'actionneur 100 ou actionnée, en cas de défaillance du servofrein, directement par le piston plongeur 110 s'appuyant sur le disque de réaction 140 poussant la tige de poussée 130. Le piston d'actionneur 100 est soumis à l'action d'un ressort de rappel 250 simplement esquissé. Le servofrein est un servofrein électrique dont le moteur est, de préférence, un moteur électrique transmettant son mouvement commandé au piston d'actionneur. Ces moyens ne sont pas représentés.

Le piston plongeur 110 et les différents équipements en entrée et en sortie sont alignés suivant un axe XX. Pour la description, il convient de distinguer par convention, le côté avant, dirigé vers le maître-cylindre et le côté arrière, dirigé vers la tige de commande 111. Pour simplifier les dessins et la description, ni le servofrein, ni le maître-cylindre de cet ensemble ne sont représentés.

Le piston d'actionneur 100 est constitué d'une pièce 120, notamment en matière plastique injectée formée d'un corps cylindrique 121 à l'arrière et d'une collerette 122 à l'avant. Le corps cylindrique 121 loge le piston plongeur 110 et reçoit un détecteur de course différentielle 160 de façon que le mouvement relatif du piston plongeur 110 par rapport au piston d'actionneur 100 commande le servofrein qui entraîne le piston d'actionneur par des moyens non représentés.

La collerette 122 entoure l'ouverture du corps cylindrique 121 de la pièce 120. La face avant de la collerette 122 et l'ouverture du corps cylindrique 121 reçoivent une coupelle 150. La couronne périphérique 151 de la coupelle 150 sert d'appui au ressort de rappel 250 du piston d'actionneur et sa partie médiane forme un logement 152 recevant le disque de réaction 140 dont la face avant est appuyée contre la base 131 de la tige de poussée 130. La face arrière du disque de réaction 140 est en appui contre l'épaulement 155du logement 152 de la coupelle 150.

La coupelle 150 se prolonge par un petit logement arrière 153, avec une ouverture 154 autour de l'axe XX et recevant une pièce de transmission en forme de piston 145, rigide, mobile en coulissement dans ce logement 153 pour s'appuyer contre le disque de réaction 140 poussé par le piston plongeur 110 lorsque le servofrein est défaillant.

L'extrémité arrière 123 du corps cylindrique 121 reçoit le piston plongeur 110 et retient celui-ci, tout en permettant son coulissement. L'arrière du servofrein est fermé par un capot 170 ouvert autour de l'axe XX pour le passage de la tige de commande 111 tout en retenant le piston plongeur 110.

Le piston plongeur 110 comporte à cet effet, à son extrémité arrière, une collerette 112 de diamètre plus grand que l'ouverture 171 du capot 170 pour être retenue par le capot 170 fixé au corps du servofrein non représenté.

Un ressort de rappel 113 logé en grande partie dans une gorge périphérique 124 de l'arrière du corps 110 du piston d'actionneur, s'appuie contre la collerette 112 du piston plongeur 110 et repousse celui-ci vers l'arrière, en butée contre le capot 170.

Comme le montrent les coupes des figures 1 et 2 selon les deux plans de coupe (figure 1A) et l'extrémité arrière 123 du corps cylindrique 121 comporte une disposition cruciforme intérieure composée de pattes primaires 125 venant en saillie vers l'intérieur du corps cylindrique 121 et formant le palier de guidage du piston plongeur 110. Ces pattes primaires 125 ont une certaine longueur (L) correspondant à la surface de palier du piston plongeur 110 et elles se terminent, côté avant, par une surface de butée 126 au-delà de laquelle le diamètre intérieur du corps cylindrique 121 est élargi.

Le piston plongeur 110 coopère avec ce palier de coulissement formé par les pattes 125 en étant retenu par la butée 126. Pour cela, le piston plongeur 110 comporte une surface cylindrique de glissement 114 coopérant avec le palier et de longueur supérieure à celle (L) du palier.

Au-delà de cette surface de guidage 114, le piston plongeur 110 comporte une disposition cruciforme composée de pattes secondaires 115 dépassant vers l'extérieur de la section de la surface de guidage cylindrique 114 et ayant une forme complémentaire à celle de la disposition cruciforme des pattes primaires 125 du corps 121. Cela signifie que la forme des pattes secondaires 115 correspond sensiblement à l'intervalle subsistant entre les pattes primaires 125 du corps cylindrique 121. La disposition périphérique est identique mais l'orientation angulaire est décalée de sorte qu'au montage, le piston plongeur 110 s'introduit par l'arrière dans le corps cylindrique 121 du piston d'actionneur 120 en étant dans une orientation angulaire selon l'axe XX, décalée par rapport à l'orientation angulaire du corps cylindrique 121 de façon à faire passer les pattes secondaires 115 dans l'intervalle des pattes primaires 125. Lorsque le piston plongeur 110 est suffisamment engagé pour que les pattes secondaires 115 se trouvent devant les pattes primaires 125, un mouvement de pivotement relatif entre le piston plongeur 110 et le corps cylindrique 121 met les pattes secondaires 115, au moins en chevauchement périphérique partiel avec les pattes primaires 125 et devant celles-ci.

Cette orientation angulaire est ensuite bloquée de sorte que le piston plongeur 110 est retenu dans le corps cylindrique 121 tout en pouvant coulisser par rapport à celui-ci contre l'action de son ressort de rappel 113 mis en place avant l'introduction et le verrouillage du piston plongeur 110 dans le corps cylindrique 121.

L'orientation du piston plongeur 110 autour de l'axe XX est bloquée par rapport au corps cylindrique 121 du piston d'actionneur par un manchon de verrouillage et de guidage 180 introduit par le côté avant du piston d'actionneur 100 à travers l'ouverture de la collerette 122 et son corps cylindrique 121. Ce manchon 180 qui se glisse dans le corps cylindrique 121, a une dispositions cruciforme de nervures 181 (figure 1) de section et de disposition identiques à la disposition cruciforme de l'intervalle des pattes secondaires 115 du piston plongeur 110 et une longueur telle que lorsque le manchon 180 est placé dans le corps cylindrique 121, les nervures de guidage 181 viennent dans l'intervalle entre les pattes secondaires 115 quelle que soit la position de coulissement du piston plongeur 110. Le piston plongeur 110 est ainsi bloqué en rotation par rapport au corps cylindrique 121, c'est-à-dire au piston d'actionneur 100, tout en pouvant coulisser de manière guidée entre les nervures 181 du manchon 180 en fonction de la poussée exercée par la pédale de frein sur la tige de commande 111 et du mouvement appliqué au piston d'actionneur 100 par le servofrein.

Après cette mise en place du manchon 180, on introduit le détecteur de course 160 comportant, le cas échéant, le circuit de traitement du signal, dans une réservation 127 appropriée du manchon 180, pour être positionné de manière précise par rapport à l'aimant 161 du piston plongeur 110.

Le câble 162 du détecteur 160 passe dans une gorge de la collerette 122 pour en sortir comme indiqué et être relié au circuit de commande du servofrein.

Après mise en place du détecteur de course 160, le piston d'actionneur 100 reçoit la coupelle 150 logeant le disque de réaction 140. La coupelle 150 est soumise, au niveau de sa couronne extérieure 151, à la poussée du ressort de rappel 250, entourant la tige de poussée 130, elle-même appliquée contre le disque de réaction 140.

Dans ce mode de réalisation, le piston plongeur 110 est composé de deux parties, une partie arrière 110A munie des pattes secondaires 115 et une partie avant 110B, cylindrique, formant le prolongement et munie de l'aimant 161 à un emplacement approprié, l'aimant 161 de façon à coopérer avec le circuit du détecteur 160 devant lequel passe cet aimant pendant le fonctionnement du piston d'actionneur 100. Cette partie cylindrique 110B a une section et une orientation identiques à la section cruciforme formée par les pattes secondaires 115 de la partie arrière 110A du piston plongeur 110.

Le prolongement 110B du piston 110 est réalisé en un matériau amagnétique.

A l'avant de la partie 110B, se prolonge par une section réduite 110C pour passer par l'ouverture 154 du logement arrière 153 de la coupelle 150, entrer en contact avec le piston intermédiaire 145 et le pousser ; celui-ci poussera le disque de réaction 140 en fonctionnement de secours.

Le contour des pattes secondaires 115A correspond à la section intérieure du corps cylindrique 121, au moins au niveau de sa partie arrière et le contour des pattes secondaires 115B correspond au contour intérieur du manchon 180.

La partie arrière 110A et la partie avant 110B sont assemblées par une liaison par la forme, selon des moyens non détaillés.

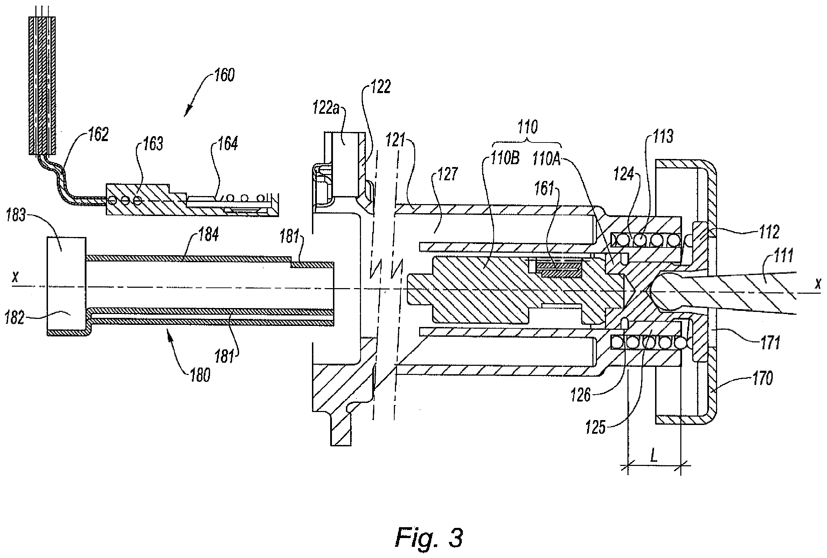

La figure 3 montre de manière plus simple, la structure du corps du piston d'actionneur décomposé, la coupe étant faite selon le plan II-II pour le corps cylindrique 121 et selon le plan de coupe I-I pour la collerette 122. Le piston plongeur 110 (110A) avec son prolongement 110B sont représentés mis en place dans le corps cylindrique 121 du piston d'actionneur 100 mais le manchon 180 n'a pas encore été mis en place entre les deux parties 110A, 110B du piston plongeur 110 et le corps cylindrique 121.

A gauche, apparaît le manchon 180 avec, en partie basse, en coupe, la forme d'une nervure intérieure 181 creuse servant au blocage en rotation et au guidage du piston 110, c'est-à-dire de sa partie arrière 110A et de sa partie avant 110B.

Le manchon 180 a une partie avant 182, agrandie, recevant la coupelle 150 avec le logement du disque de réaction 140 et le prolongement arrière 153 avec le piston intermédiaire 145 (ces éléments ne sont pas représenté dans cette figure). Le dessus 183 est ouvert pour accéder par l'avant à la réservation 127 de l'emplacement du détecteur 160 dans le corps cylindrique 121.

Le support 163 du détecteur 160 avec la plaque 164 du circuit de détection et le câble de liaison 162 sont représentés détachés.

Dans cette vue, la partie arrière 123 du corps cylindrique 121 a été représentée avec les pattes primaires 125 et selon le plan de coupe II-II de la figure 1A alors que l'avant avec la collerette 122 est représenté coupé selon le plan de coupe I-I de la figure 1A.

A l'avant, la forme intérieure du corps cylindrique 121 apparaît également avec, dans le dessus, la réservation 127 recevant le détecteur 160 et son support 163. Le dessus du manchon 180 est formé par un côté plat 184 pour passer sous le détecteur 160 et il se prolonge à l'arrière par des nervures 181 ; plus exactement, les nervures se prolongent par des branches seules 181a, l'enveloppe cylindrique n'étant pas prévue pour venir se loger dans l'intervalle des pattes secondaires 115A de la partie arrière 110A alors que comme déjà indique la hauteur radiale des pattes 115B est inférieure à celle des pattes 115A. Les pattes 115B sont coiffées par le manchon 180 et leur intervalle reçoit les nervures 181 alors que les pattes secondaires 115A viennent se loger et se déplacer entre les branches 181a constituant les prolongement des seules nervures 181 sans l'enveloppe du manchon 180.

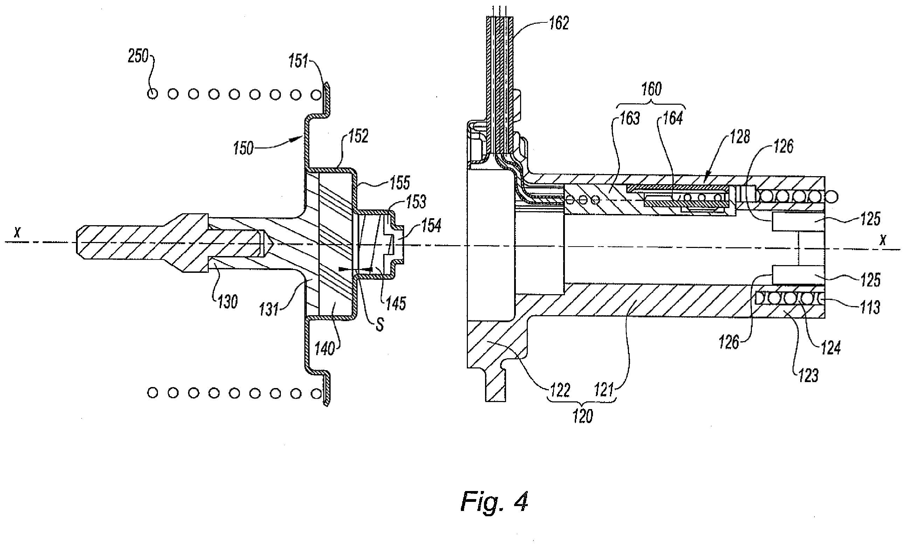

La figure 4 est une vue en coupe faite dans le même esprit que celle de la figure 3, montrant deux pattes primaires 125 dont les plans médians sont situés respectivement dans le plan II-II et le plan perpendiculaire à celui-ci. L'avant, coupé selon le plan I-I de la figure 1A, montre le corps cylindrique avec la mise en place du détecteur de course 160 et, en face de la collerette 122, la coupelle 150 portant le disque de réaction 140, le piston intermédiaire 145 et la tige de poussée 130.

Les figures 5A-5C permettent de mieux comprendre l'assemblage du piston d'actionneur sans représenter la pièce 120 et la coupelle 150.

La figure 5A est une vue éclatée avec les composants alignés. La partie 110A du piston plongeur 110 est représentée derrière sa partie avant 110B (ou prolongement) et le circuit 164 du détecteur 160, représenté au-dessus du piston plongeur 110B avec son aimant 161. Le manchon de verrouillage et de guidage 180 est constitué par un corps de forme cylindrique avec son dessus plat 184, bordé par une partie avant 182 de diamètre plus grand dont le dessus 183 est coupé et se prolonge de part et d'autre de cette partie coupée par deux pattes de guidage et de stabilisation logées dans les rainures de la pièce 120. Les nervures 181 en relief vers l'intérieur du manchon 180, apparaissent à droite. Ces nervures 181 se prolongent du côté arrière par les quatre branches 181a de même section. Les nervures se logent dans les intervalles entre les pattes 115, 115B des deux parties 110A, B du piston plongeur 110.

Selon la forme de réalisation représentée à la figure 5A, le piston plongeur 110 se compose d'une partie arrière 110A qui est le piston plongeur proprement dit ou sa partie reliée à la tige de commande 111 et une partie avant 110B. Ces deux parties sont réunies par emboîtement, par exemple de force comme le montre la vue en coupe des figures 1, 2 et 3. Ces pièces sont dans des matières différentes, la partie arrière 110A étant par exemple en acier et la partie 110B en une matière amagnétique tel que de l'aluminium puisque située au niveau du détecteur 160 et portant l'aimant 161.

De façon générale, la section des deux parties 110A, 110B est identique ou du moins, voisine. Dans la mesure où la partie 110B a une section strictement identique à celle de la partie 110A, elle peut être solidarisée à celle-ci et le piston plongeur 110 ainsi composé se met en place dans le corps cylindrique 121 en passant par l'arrière de celui-ci puis en verrouillant par un pivotement de type quart de tour, comme déjà exposé.

Si toutefois comme dans la variante représentée à la figure 5A, la section de la partie avant 110B diffère légèrement de la section de la partie arrière 110A en ce que les trois pattes secondaires 115B sont identiques aux pattes secondaires 115A de la partie arrière, la patte du dessus 115BB en diffère par sa largeur pour recevoir la plaque de circuit 164 du détecteur 160. Dans ce cas, la partie arrière 110A se mettra en place en passant par l'extrémité arrière du corps 121 et la partie 110B sera introduite par l'avant et enfoncée de force dans la partie arrière 110A avec son téton.

Les canaux formés entre les pattes 115 sont plus larges que les canaux de part et d'autre de la patte 115BB. La section des nervures 180 sera adaptée à cette largeur différente. Il en est de même de l'intervalle et de la position entre les pattes 115A qui devra recevoir les branches 181A de même section que celle des nervures 181 dont elle constitue le prolongement.

Enfin et selon une autre variante non représentée, les pattes 115B ont toutes la même section, les dimensions de la plaque de circuit 164 étant réduites en conséquence.

Mais cette légère différence de structure entre les deux formes de réalisation ne modifie pas la principe de l'assemblage et du guidage du piston plongeur 110 dans la pièce 120 du piston d'actionneur 100 avec interposition du manchon de verrouillage et de guidage 180.

La figure 5B montre l'assemblage du piston plongeur 110 et du manchon 180 avec le ressort de rappel 113 du piston plongeur 110.

La figure 5C est une vue de face montrant l'ensemble ainsi réalisé avec le piston d'actionneur 100 représenté schématiquement.

Le montage du piston d'actionneur déjà partiellement évoqué ci-dessus, se fait comme suit :
- On installe d'abord le piston plongeur 110 ou du moins sa partie arrière 110A dans l'extrémité arrière 123 du corps cylindrique 121 du piston d'actionneur 100 en procédant par coulissement et verrouillage par rotation partielle, et cela après avoir mis en place le ressort 113 dans le logement 124.
- Après cette mise en place sans la partie avant 110B du piston plongeur, on met en place la partie avant 110B en l'enfonçant de force dans le logement correspondant de la partie arrière 110A.
- Après cela, on met en place dans la pièce 120, le détecteur 160 avec son câble 162, puis on ferme l'avant de la pièce 120 par la coupelle 150, la pièce intermédiaire 145, le disque de réaction 140 et la tige de poussée 130.

Tous les éléments sont montés selon un seul axe qui constitue l'axe principal. Globalement le corps de valve ou piston d'actionneur a un diamètre réduit permettant de transmettre les efforts déportés résultant de l'entraînement du piston d'actionneur, plus près de l'axe de poussée (axe XX) sur le maître-cylindre. On évite ainsi d'induire un couple important ce qui se traduit par une meilleure efficacité liée à un frottement réduit sur le guidage du piston d'actionneur.

Le fait de décaler le disque de réaction vers le maître-cylindre et la forme spécifique des pièce permet de réduire le diamètre du piston. L'intégration du capteur de course permet également de gagner en encombrement axial.

La présente invention concerne le domaine des systèmes de freinage et l'industrie des équipements automobiles fabriquant des systèmes de freinage.

### NOMENCLATURE

- 100: piston d'actionneur
- 110: piston plongeur
- 110A: partie avant du piston plongeur
- 110B: partie arrière du piston plongeur
- 110C: prolongement de section réduite
- 111: tige de commande
- 112: collerette du piston plongeur
- 113: ressort de rappel
- 114: surface cylindrique
- 115, 115, 115B, 115BB: pattes secondaires

- 120: pièce en matière plastique
- 121: corps cylindrique
- 122: collerette
- 112: gorge ouverte
- 123: arrière du corps cylindrique
- 124: gorge
- 125: pattes primaires
- 126: surface du butée
- 127: réservation

- 130: tige de poussée
- 131: base de la tige de poussée

- 140: disque de réaction
- 145: pièce de transmission / piston intermédiaire

- 150: coupelle
- 151: couronne périphérique
- 152: logement
- 153: logement arrière
- 154: ouverture
- 155: épaulement

- 160: détecteur de course différentielle
- 161: aimant
- 162: câble de liaison
- 163: support de détecteur
- 164: plaque de circuit

- 170: capot
- 171: ouverture

- 180: manchon
- 181: nervure
- 181a: branche
- 182: partie avant
- 183: dessus
- 184: côté plat
- 185: pattes

- 250: ressort de rappel

- S: saut
- XX: axe
- AV: avant (côté maître-cylindre)
- AR: arrière (côté tige de commande)

## Revendications

1. Piston d'actionneur recevant un piston plongeur relié à la tige de commande et agissant par le disque de réaction sur la tige de poussée, le piston d'actionneur étant soumis à l'action d'un ressort de rappel et de l'entraînement du servofrein,
**caractérisé en ce que**
A- le piston d'actionneur (100) est formé d'une pièce injectée (120) composée d'un corps cylindrique (121) à l'arrière et d'une collerette (122) à l'avant,
- le corps cylindrique (121) recevant le piston plongeur (110) et le détecteur de course (160),
- l'ouverture de la collerette (122) débouchant dans le corps cylindrique (121) étant occupée par une coupelle (150) couvrant la face avant de la collerette pour servir d'appui au ressort de rappel (150) et recevoir le disque de réaction (140) dont la face arrière est accessible au piston plongeur (110),
B- l'extrémité arrière (123) du corps cylindrique (121) du piston d'actionneur (100) comporte une disposition cruciforme intérieure de pattes primaires (125) venant en saillie vers l'intérieur pour former le palier de guidage du piston plongeur (110), l'avant des pattes formant une butée (126),
C- le piston plongeur (110) comporte une surface cylindrique étant bordée à l'avant par une disposition cruciforme de pattes secondaires (115) de forme complémentaire à celle du corps (121) du piston d'actionneur et d'orientation périphérique globale décalée, pour, au montage, introduire le piston plongeur (110) par l'arrière dans le corps cylindrique (121) et le retenir par la venue en butée des pattes secondaires (115) devant les pattes primaires (125) après pivotement relatif de celles-ci,
D- un manchon de verrouillage et de guidage (180),
muni d'une disposition cruciforme de nervures (181) adaptée à la disposition cruciforme des intervalles entre les pattes secondaires (115), est introduit dans le piston d'actionneur (100) par l'avant et vient avec les nervures (181, 181a) dans l'intervalle des pattes secondaires (115) pour bloquer en rotation le piston plongeur (110) tout en permettant son coulissement.

2. Piston d'actionneur selon la revendication 1,
**caractérisé en ce que**
le piston plongeur (110) est terminé à l'arrière par une collerette (112) de butée et d'appui de son ressort de rappel (113) ayant une surface extérieure cylindrique (114) de guidage devant la collerette de diamètre correspondant à celui du palier et de longueur supérieure à celle du palier.

3. Piston d'actionneur selon la revendication 1,
**caractérisé en ce que**
le manchon de verrouillage et de guidage (180) est bloqué en rotation dans le corps cylindrique (121) par une liaison par la forme (pattes 185) et en translation par la coupelle (150).

4. Piston d'actionneur selon la revendication 1,
**caractérisé en ce que**
le manchon de verrouillage et de guidage (180) a une côté plat (184) en regard de la réservation (127) du corps cylindrique (121) pour recevoir le détecteur de course (160).

5. Piston d'actionneur selon les revendications 1 et 2,
**caractérisé en ce que**
le piston plongeur (110) est composé d'une partie arrière (110A) reliée à la tige de commande (111) et portant la collerette (112) et les pattes secondaires (115, 115A) et
d'une partie avant (110B) en une matière non magnétique, portant l'aimant (161) en regard du détecteur (160),
cette partie avant (110B) ayant une section cruciforme dont les intervalles sont identiques à ceux de la section formés par les pattes secondaires (115, 115A) de la partie arrière (110A), pour recevoir les nervures (181) du manchon (180).

6. Piston d'actionneur selon la revendication 1,
**caractérisé en ce que**
le contour des pattes secondaires (115B) de la partie avant (110B) s'inscrit dans le contour intérieur de la section de manchon (180) et le contour extérieur des pattes secondaires (115A) de la partie arrière (110A) dépassent ce contour, les nervures (181) du manchon (180) se prolongeant en forme de doigts (181a) pour venir dans l'intervalle des pattes secondaires (115A) de la partie arrière (110A) du piston plongeur (110) sur la longueur nécessaire au mouvement de coulissement du piston plongeur (110).

7. Piston d'actionneur selon la revendication 5,
**caractérisé en ce que**
les deux parties (110A, 110B) sont assemblées par une liaison par la forme.

8. Servofrein **caractérisé en ce qu'**il comporte un piston d'actionneur selon l'une quelconque des revendications 1 à 7.

## Patentansprüche

1. Bedienungskolben, der einen Plungerkolben aufnimmt, der mit der Steuerstange verbunden ist und über die Reaktionsscheibe auf die Schubstange einwirkt, wobei der Bedienungskolben der Wirkung einer Rückstellfeder und des Antriebs eines Bremskraftverstärkers unterzogen wird,
**dadurch gekennzeichnet, dass**
A- der Bedienungskolben (100) von einem Einspritzteil (120) gebildet ist, das aus einem zylindrischen Körper (121) hinten und einem Kragen (122) vorne gebildet ist,
- wobei der zylindrische Körper (121) den Plungerkolben (110) und den Wegaufnehmer (160) aufnimmt,
- wobei die Öffnung des Kragens (122), die in den zylindrischen Körper (121) mündet, von einer Schale (150) eingenommen ist, die die Vorderseite des Kragens bedeckt, um als Auflage für die Rückstellfeder (150) zu dienen und die Reaktionsscheibe (140) aufzunehmen, deren Rückseite am Plungerkolben (110) zugänglich ist,
B- das hintere Ende (123) des zylindrischen Körpers (121) des Bedienungskolbens (100) eine kreuzförmige innere Anordnung von primären Klauen (125) umfasst, die nach innen herausragen, um das Führungslager des Plungerkolbens (110) zu bilden, wobei der vordere Bereich der Klauen einen Anschlag (126) bildet,
C- der Plungerkolben (110) eine zylindrische Fläche umfasst, die vorne von einer kreuzförmigen Anordnung von sekundären Klauen (115) von zu jener des Körpers (121) des Bedienungskolbens komplementärer Form und mit einer versetzten globalen peripheren Ausrichtung umrandet ist, um bei der Montage den Plungerkolben (110) von hinten in den zylindrischen Körper (121) einzuführen und ihn durch das Anschlagen der sekundären Klauen (115) vor den primären Klauen (125) nach dem relativen Schwenken derselben zu halten,
D- eine Hülse zur Verriegelung und Führung (180), die mit einer kreuzförmigen Anordnung von Rippen (181) versehen ist, die an die kreuzförmige Anordnung der Zwischenräume zwischen den sekundären Klauen (115) angepasst ist, in den Bedienungskolben (100) von vorne eingeführt wird und mit den Rippen (181, 181a) in den Zwischenraum der sekundären Klauen (115) gelangt, um den Plungerkolben (110) in Drehung festzustellen, wobei sein Gleiten möglich ist.

2. Bedienungskolben nach Anspruch 1, **dadurch gekennzeichnet, dass** der Plungerkolben (110) hinten mit einem Anschlag- und Stützkragen (112) seiner Rückstellfeder (113) endet, der eine zylindrische Außenführungsfläche (114) vor dem Kragen mit einem Durchmesser entsprechend jenem des Lagers und einer Länge größer als jene des Lagers aufweist.

3. Bedienungskolben nach Anspruch 1, **dadurch gekennzeichnet, dass** die Hülse zur Verriegelung und Führung (180) in Drehung in dem zylindrischen Körper (121) durch eine Verbindung über die Form (Klauen 185) und in Translation durch die Schale (150) festgestellt ist.

4. Bedienungskolben nach Anspruch 1, **dadurch gekennzeichnet, dass** die Hülse zur Verriegelung und Führung (180) eine flache Seite (184) gegenüber der Ausnehmung (127) des zylindrischen Körpers (121) für die Aufnahme des Wegaufnehmers (160) aufweist.

5. Bedienungskolben nach den Ansprüchen 1 und 2, **dadurch gekennzeichnet, dass** der Plungerkolben (110) aus einem hinteren Teil (110A), der mit der Steuerstange (111) verbunden ist und den Kragen (112) und die sekundären Klauen (115, 115A) trägt, und aus einem vorderen Teil (110B) aus einem nicht magnetischen Material, der den Magneten (161) gegenüber dem Aufnehmer (160) trägt, besteht, wobei dieser vordere. Teil (110B) einen kreuzförmigen Querschnitt hat, dessen Zwischenräume identisch mit jenen des Querschnitts sind, der von den sekundären Klauen (115, 115A) des hinteren Teils (110A) gebildet ist, um die Rippen (181) der Hülse (180) aufzunehmen.

6. Bedienungskolben nach Anspruch 1, **dadurch gekennzeichnet, dass** sich die Kontur der sekundären Klauen (115B) des vorderen Teils (110B) in die innere Kontur des Hülsenquerschnitts (180) einschreibt, und die äußere Kontur der sekundären Klauen (115A) des hinteren Teils (110A) über diese Kontur hinausragt, wobei sich die Rippen (181) der Hülse (180) in Form von Fingern (181A) verlängern, um in den Zwischenraum der sekundären Klauen (115A) des hinteren Teils (110A) des Plungerkolbens (110) auf der für die Gleitbewegung des Plungerkolbens (110) notwendigen Länge zu gelangen.

7. Bedienungskolben nach Anspruch 5, **dadurch gekennzeichnet, dass** die zwei Teile (110A, 110B) durch eine Verbindung über die Form zusammengefügt sind.

8. Bremskraftverstärker, **dadurch gekennzeichnet, dass** er einen Bedienungskolben nach einem der Ansprüche 1 bis 7 umfasst.

## Claims

1. Actuator piston receiving a hydraulic actuator linked to the control rod and acting via the reaction disk on the thrust rod, the actuator piston being subjected to the action of a return spring and of the drive of the servo brake,
**characterized in that**
A- the actuator piston (100) is formed by an injection-molded piece (120) consisting of a cylindrical body (121) at the rear and a collar (122) at the front,
- the cylindrical body (121) receiving the hydraulic actuator (110) and the travel detector (160),
- the opening of the collar (122) opening into the cylindrical body (121) being occupied by a shell (150) covering the front face of the collar to serve as a support for the return spring (150) and receive the reaction disk (140), the rear face of which is accessible to the hydraulic actuator (110),
B- the rear end (123) of the cylindrical body (121) of the actuator piston (100) includes an internal cruciform arrangement of primary lugs (125) protruding toward the interior to form the guiding bearing for the hydraulic actuator (110), the front of the lugs forming an abutment (126),
C- the hydraulic actuator (110) includes a cylindrical surface that is bounded at the front by a cruciform arrangement of secondary lugs (115) of a form complementing that of the body (121) of the actuator piston and with an offset overall peripheral orientation, in order, on assembly, to introduce the hydraulic actuator (110) by the rear into the cylindrical body (121) and retain it by the abutment of the secondary lugs (115) against the primary lugs (125) after relative pivoting thereof,
D- a locking and guiding sleeve (180),
provided with a cruciform arrangement of ribs (181) adapted to the cruciform arrangement of the intervals between the secondary lugs (115), is introduced into the actuator piston (100) by the front and fits with the ribs (181, 181a) in the interval of the secondary lugs (115) to block the rotation of the hydraulic actuator (110) while allowing it to slide.

2. Actuator piston according to Claim 1,
**characterized in that**
the hydraulic actuator (110) is terminated at the rear by an abutment collar (112) supporting its return spring (113) having a guiding cylindrical outer surface (114) in front of the collar with a diameter corresponding to that of the bearing and with a length greater than that of the bearing.

3. Actuator piston according to Claim 1,
**characterized in that**
the locking and guiding sleeve (180) is blocked in rotation in the cylindrical body (121) by a form link (lugs 185) and in translation by the shell (150).

4. Actuator piston according to Claim 1,
**characterized in that**
the locking and guiding sleeve (180) has a flat side (184) facing the reservation (127) of the cylindrical body (121) to receive the travel detector (160) .

5. Actuator piston according to Claims 1 and 2,
**characterized in that**
the hydraulic actuator (110) consists of a rear part (110A) linked to the control rod (111) and bearing the collar (112) and the secondary lugs (115, 115A) and
a front part (110B) made of a nonmagnetic material, bearing the magnet (161) facing the detector (160),
this front part (110B) having a cruciform section, the intervals of which are identical to those of the section formed by the secondary lugs (115, 115A) of the rear part (110A), to receive the ribs (181) of the sleeve (180).

6. Actuator piston according to Claim 1,
**characterized in that**
the contour of the secondary lugs (115B) of the front part (110B) fits into the internal contour of the sleeve section (180) and the external contour of the secondary lugs (115A) of the rear part (110A) extending beyond this contour, the ribs (181) of the sleeve (180) being extended in the form of fingers (181a) to fit into the interval of the secondary lugs (115A) of the rear part (110A) of the hydraulic actuator (110) over the length necessary to the sliding movement of the hydraulic actuator (110).

7. Actuator piston according to Claim 5,
**characterized in that**
the two parts (110A, 110B) are assembled by a form link.

8. Servo brake, **characterized in that** it comprises an actuator piston according to any one of Claims 1 to 7.
